# EUROPEAN PATENT SPECIFICATION

(11) **EP 0 500 085 B1**
(45) Date of publication and mention of the grant of the patent: **27.12.1996**
(21) Application number: 92102782.7
(22) Date of filing: 19.02.1992
(51) Int. Cl.: G02F 1/133, H01J 17/48, G09G 3/20

(54) **Method of fabricating an Electro-optical device**
Verfahren zum Herstellen einer Elektrooptischen Vorrichtung
Procédé de fabrication d'un Dispositif électro-optique

(30) Priority: 20.02.1991 JP 47784/91
(43) Date of publication of application: 26.08.1992
(73) Proprietor: SONY CORPORATION, Tokyo (JP)
(72) Inventor: Miyazaki, Shigeki, Shinagawa-ku, Tokyo (JP)
(74) Representative: Müller, Frithjof E., Dipl.-Ing.

(56) References cited:
- GB-A- 1 348 204
- US-A- 4 896 149
- PATENT ABSTRACTS OF JAPAN vol. 14, no. 529 (P-1133)20 November 1990 & JP-A-02 221 996
- PATENT ABSTRACTS OF JAPAN vol. 11, no. 231 (E-527)28 July 1987 & JP-A-62 047 932
- PATENT ABSTRACTS OF JAPAN vol. 14, no. 239 (E-930)21 May 1990 & JP-A-02 065 031

## Description

The present invention relates to a method of fabricating an electro-optical device and an addressing structure in accordance with the precharacterizing parts of independent claims 1 and 11, respectively. Such a method is known from JP-A-217396/89.

As the means for allowing, e.g., a liquid crystal display to have high resolution and high contrast, there is generally carried out a method in which active elements such as transistors, etc. are provided every display pixels to drive them (which method is so called an active matrix addressing system).

In this case, however, since it is necessary to provide a large number of semiconductor elements such as thin film transistors, the problem of yield is apprehended particularly when the display area is enlarged, giving rise to the great problem that the cost is necessarily increased.

Thus, as the means for solving this, Buzaku et al. have proposed in the Japanese Laid Open Application No. 217396/89 publication a method utilizing discharge plasma in place of semiconductor elements such as MOS transistors or thin film transistors, etc. as an active element.

The configuration of an image display device for driving a liquid crystal by making use of discharge plasma will be briefly described below.

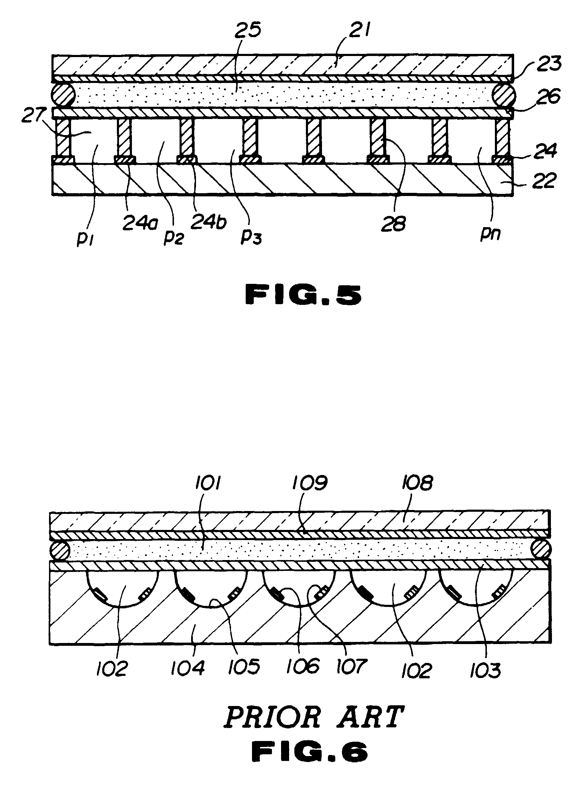

This image display device is called a Plasma Addressed Liquid Crystal display device (PALC). As shown in FIG. 6, a liquid crystal layer 101 serving as an electro-optic material layer and plasma chamcers 102 are adjacently arranged through a thin dielectric sheet 103 comprised of glass, etc.

The plasma chambers 102 are constituted by forming a plurality of grooves 105 in parallel to each other in a glass substrate or base plate 104. Within these chambers, ionizable gas is filled. Further, pairs of electrodes 106 and 107 in parallel to each other are provided at respective grooves 105. These electrodes 106 and 107 function as an anode and a cathode for ionizing gas within the plasma chambers 102 to generate discharge plasma.

On the other hand, the liquid crystal layer 101 is held by the dielectric sheet 103 and a transparent base plate 108. On the surface at the liquid crystal layer 101 side of the transparent base plate 108, transparent electrodes 109 are formed. These transparent electrodes 109 are perpendicular to the plasma chambers 102 constituted by The grooves 105. The portions where the transparent electrodes 109 and the plasma chambers 102 intersect with each other correspond to respective pixels.

In the above-mentioned image display device, by switching and scanning in sequence the plasma chambers 102 where plasma discharge is carried out, and applying signal voltages to the transparent electrodes 109 on the liquid crystal layer 101 side in synchronism with the switching scan operation, these signal voltages are held by respective pixels. The liquid crystal layer 101 is thus driven.

Accordingly, the grooves 105, plasma chambers 102 respectively correspond to one scanning line, and the discharge region is divided every scanning unit.

Meanwhile, in image display devices utilizing discharge plasma as described above, it is considered that an enlarged display area is more easily realized than those utilizing semiconductor elements, but various problems are left in putting such device into practice.

For example, forming grooves 105 for constituting a plasma chamber 102 on a glass substrate 10 which is a transparent substrate involves considerably great problem in manufacture. Particularly, it is extremely difficult to form grooves at high density.

Further, it is required to form electrodes 106 and 107 for discharge in the grooves 105. However, an etching process therefor is troublesome, and it is difficult to hold the scanning between electrodes 106 and 107 with good accuracy.

### Summary of the Invention

With the above-mentioned problems with such prior arts in view, this invention has been proposed, and its object is to provide a method of fabricating an electro-optical device applied as an image display device having simple manufacturing steps and resulting in an electro-optical device suitable for implementation of enlarged display surface and high miniaturization.

To obtain the above described object, a method of fabricating an electro-optical device comprises steps of:
- forming a first substrate having a plurality of non-overlapping first electrodes on a major surface thereof;
- forming a second substrate opposed to the first substrate;
- forming a plurality of non-overlapping second electrodes on a major surface of the second substrate, the second electrodes being disposed substantially perpendicular to the first electrodes;
- forming an electro-optical material layer between the first and second electrodes; and
- forming a discharge chamber disposed between the electro-optical material layer and the second substrate and filling the discharge chamber with an ionizable gas, the discharge chamber having a plurality of scanning units **characterized by** a step of forming partitioning walls (9; 28) for dividing the scanning units by
- laminate-printing a glass paste plural times by a screen printing process, wherein the number of screen printings is adjusted to control the gap interval of the discharge chamber (claim 1).

Depending claims 3 to 9 are specifying advantageous developments thereof.

According to a second aspect of the invention a method of fabricating an addressing structure is provided comprising steps of:
- forming a substrate having a plurality of electrodes on a major surface thereof;
- forming a dielectric material layer opposed to the substrate and
- filling an ionizable gas between the substrate and the dielectric material layer, the ionizable defining a discharge region which provides scanning units **characterized in that** there is provided a step of forming partitioning walls for dividing the scanning units by laminate-printing a glass paste plural times by a screen printing process, wherein the number of screen printings is adjusted to control the gap interval of the discharge region (claim 11).

In the electro-optical device of this invention, partitioning walls dividing the discharge area every scanning unit are formed by the screen-printing process. The screen-printing process is a very simple technique, and permits formation of a fine pattern. Thus, the productivity and/or working efficiency can be improved to more degree as compared to the groove forming method.

Further, since the second electrodes for discharge are formed on a flat substrate, etching process is also simple, and the distance between electrodes can be controlled with high accuracy.

### Brief Description of the Drawings

Fig. 1 is a schematic cross sectional view showing an embodiment to which an electro-optical device according to this invention is applied.

Fig. 2 is a model view showing an electrode configuration for driving the liquid crystal layer.

Fig. 3 is a model view showing an arrangement and connection state of discharge electrodes.

Fig. 4 is an equivalent circuit diagram for explaining an image display operation.

Fig. 5 is a schematic cross sectional view showing another embodiment of an image display device to which an electro-optical device according to this invention is applied.

Fig. 6 is a schematic cross sectional view showing one example of conventional image display devices.

### Description of the Preferred Embodiment

An actual embodiment to which this invention is applied will now be described in detail with reference to the attached drawings.

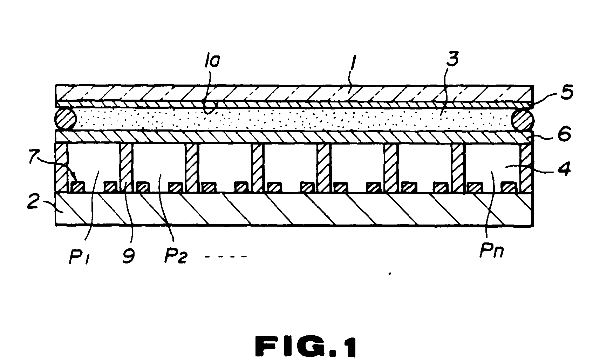

An image display device of this embodiment is of a structure, as shown in FIG. 1, in which a liquid crystal layer 3 serving as an electro-optic material layer is inserted between a flat and optically sufficiently transparent first substrate 1 and a similarly flat and transparent second substrate 2, and a space between the liquid crystal layer 3 and the second base plate 2 is utilized as a discharge chamber 4.

Here, these base plates 1 and 2 are both formed by a non-conductive and optically transparent material by taking into consideration the case where the image display device in this embodiment is of the transmission type. However, in the case where the image display device is constructed as a direct-viewing or reflection type display device, it is sufficient that either one base plate is transparent.

Belt-shaped electrodes 5 are formed on one major surface 1a of the first substrate 1, and a liquid crystal layer 3 comprised of a nematic liquid crystal, etc. is arranged in contact with the electrodes 5. This liquid crystal layer 3 is held by a thin dielectric film 6 comprised of glass, mica, or plastic, etc. between the thin dielectric film 6 and the first base plate 1. There is thus provided a configuration in such a form that so called liquid crystal cells are constituted by the first base plate 1, the liquid crystal layer 3, and the dielectric film 6.

The above-mentioned dielectric film 6 functions as an insulating shield layer of the liquid crystal layer 3 and the discharge chamber 4. If there is no dielectric film 6, there is the possibility that the liquid crystal material may flow into any discharge chamber 4, or the liquid crystal material may be polluted by gas within the discharge chamber 4. It is to be noted that in the case where a solid-state or encapsulated electro-optic material, etc. is used in place of the liquid crystal material, there are instances where such a dielectric film 6 is not required.

In addition, since the dielectric film 6 is formed by dielectric material, the dielectric film 6 itself also functions as a capacitor. Accordingly, in order to sufficiently ensure the electric coupling between the discharge chamber 4 and the liquid crystal layer 3, and to suppress a two-dimensional diffusion of charges, it is desirable that the dielectric film 6 is as thin as possible.

On the other hand, discharge electrode groups 7 are formed as a belt-shaped electrode also on the second substrate 2. Further, by supporting the peripheral portions of the second substrate 2 by means of sealing spacer members 8, it is arranged with a predetermined spacing from the dielectric film 6. Thus, a space between the second substrate 2 and the dielectric film 6 is caused to serve as a discharge chamber or region generating discharge plasma.

This discharge chamber 4 is partitioned by partition walls 9 by the printing process to provide respective independent plasma chambers P₁, P₂, P₃,.. Pₙ.

Ionizable gas is filled into respective plasma chambers P₁, P₂, P₃,... Pₙ. As the ionizable gas, helium, neon, argon, mixture gas thereof, or the like may be used.

The above-mentioned partition walls 9 are formed in parallel to respective belt-shaped electrodes of the discharge electrode groups 7, and at gaps between these belt-shaped electrodes. In this embodiment, they are formed every respective pairs of anodes and cathodes which will be described later, i.e., every respective scanning units. Accordingly, these plasma chambers P₁, P₂, P₃ ... Pₙ correspond to respective scanning lines.

The partition walls 9 are formed by the printing process. By laminate-printing, e.g., glass paste plural times by the screen printing process, there may be formed. Here, the partition walls 9 have a role of limiting the gap interval W of the discharge chamber 4 (i.e., the distance between the second substrate 2 and the dielectric film 6). This is controlled by adjusting the number of screen printings. Ordinarily, the gap width W is about 200 µm.

Further, discharge electrode groups 7 formed at respective plasma chambers P₁, P₂, P₃ ,.. Pₙ can be directly formed on the second substrate. For example, by printing a conductive paste including Ag powder, etc., those electrode groups may be formed. Of course, such electrode groups may be formed by the etching process. Since there electrodes can be formed on a flat plane surface even by any process, they can be formed with ease. In addition, the dimensional accuracy of the electrode interval, etc., can be ensured.

Accordingly, in manufacturing, discharge electrode groups 7 are first formed on the flat second substrate 2, and partition walls 9 are then formed by the printing process.

The outline of the configuration of the image display device has been described as above. On the respective base plates 1 and 2, electrodes for driving the liquid crystal layer 3 are formed, respectively. The configuration of these electrodes will now be described.

On the principal surface 1a opposite to the second substrate 2 of the first substrate 1, a plurality of belt-shaped electrodes 5 having a predetermined width are formed. These electrodes 5 are formed by a transparent conductive material, e.g., Indium Tin Oxide (ITO), etc., and are optically transparent. Further, respective electrodes 5 are arranged in parallel to each other and are arranged perpendicularly to, e.g., the display surface.

On the other hand, also on the principal surface 2a opposite to the first base plate 1 of the second base plate 2, groups of discharge electrodes 7 are similarly formed. These discharge electrode groups 7 are also parallel linear electrodes, but they are arranged in a direction perpendicular to the electrodes 5 formed on the first substrate 1. Namely, these discharge electrode groups 7 are arranged in a horizontal direction on the screen. More particularly, these discharge electrode groups 7 are comprised of anode electrodes A₁, A₂, A₃ ... Aₙ₋₁, Aₙ and cathode electrodes K₁, K₂, K₃, ... Kₙ₋₁, Kₙ. By pairing corresponding these electrodes, respective discharge electrodes are constituted. They are disposed within respective plasma chambers P₁, P₂, P₃ ... Pₙ.

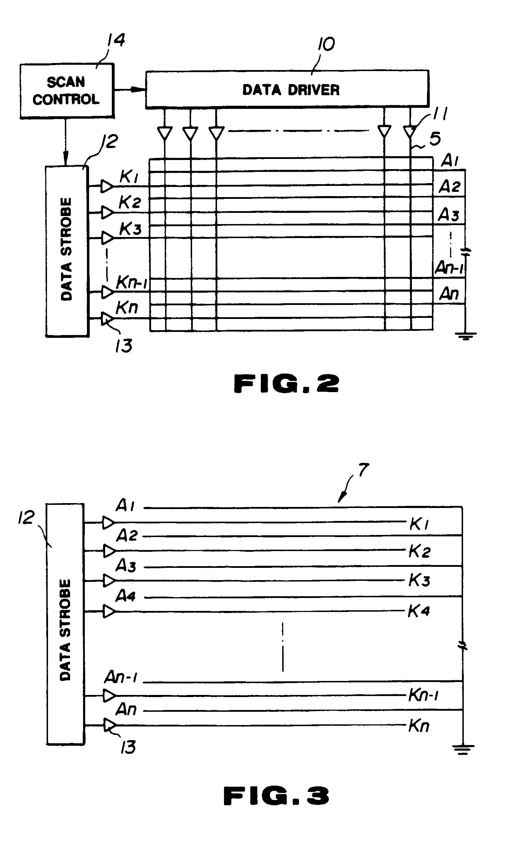

The arrangement state of the electrodes 5 formed on the first substrate 1 and the discharge electrode groups 7 formed on the second base plate 2 is shown in a model form in FIG. 2.

Here, first signal application means comprised of a data driver circuit 10 and output amplifiers 11 is connected to the electrode 5 on the first substrate 1. Thus, analog voltages outputted from the respective output amplifiers 11 are delivered as liquid crystal drive signals, respectively.

On the contrary, second signal application means comprised of a data strobe circuit 12 and output amplifiers 13 is connected to respective cathode electrodes K₁, K₂, K₃ ... Kₙ₋₁, Kₙ of the discharge electrode group 7 on the second substrate 2. Thus, pulse voltages outputted from the respective output amplifiers 12 are delivered as data strobe signals, respectively. In addition, a common reference voltage (ground voltage) is applied to the respective anode electrodes A₁, A₂, A₃ ... Aₙ₋₁, Aₙ.

Accordingly, the connection structure of the discharge electrode groups 7 formed on the second substrate 2 is as shown in FIG. 3.

Further, in order to form an image over the entirety of the display screen, there is provided a scanning control circuit 14 connected to the data driver circuit 10 and the data strobe circuit 12. This scanning control circuit 14 serves to control or regulate the functions of the data driver circuit 10 and the data strobe circuit 12 to carry out sequential addressing from row to row with respect to all pixel trains of the liquid crystal layer 3.

In the image display device constructed as described above, the liquid crystal layer 3 functions as a sampling capacitor for analog voltages applied to the electrodes 5 formed on the first substrate 1, and discharge plasma generated in the discharge chamber 4 functions as a sampling switch. Thus, an image display is carried out.

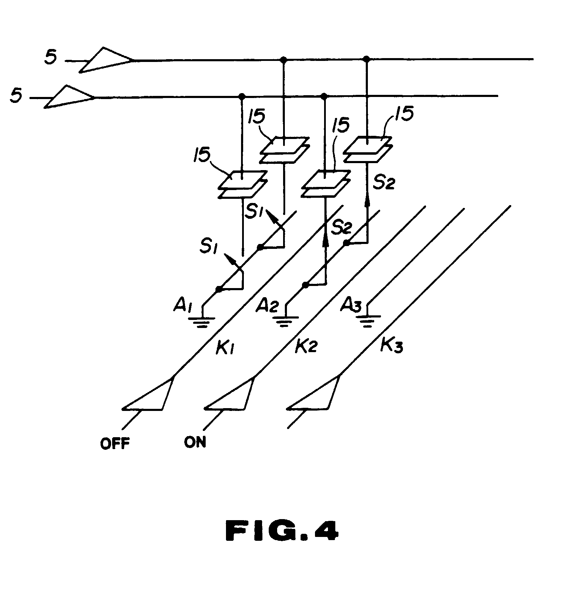

The model for explaining the image display operation is shown in FIG. 4. In FIG. 4, the liquid crystal layer 3 corresponding to respective pixels can be grasped or understood as capacitor models 15, respectively. Namely, the capacitor models 15 indicate capacitive liquid crystal cells formed at the portions where the electrodes 5 and respective plasma chambers P₁, P₂, P₃ ,.. Pₙ overlap with each other.

It is now assumed that analog voltages are applied to the respective electrodes 5 by the data driver circuit 10. Here, assuming that no data strobe signal (pulse voltage) is applied to the cathode electrode K₁ of the second substrate 2, i.e., the cathode electrode K₁ is in an OFF state, any discharge on the anode electrode A₁ and the cathode electrode K₁ is not produced. As a result, gas in the vicinity thereof is brought into a non-ionized state. Accordingly, the plasma switch S₁ (the electrical connection of the electrode 5 and the anode electrode A₁) is also placed in an OFF state. As a result, even if any analog voltage is applied to the electrodes 5, there is no change in a potential difference applied to the respective capacitor models 14.

On the other hand, if a data strobe signal is applied to the cathode electrode K₂ of the second base plate 2, i.e., the cathode electrode K₂ is in an ON state, gas is ionized by discharge between the anode electrode A₂ and the cathode electrode K₂, so an ionized region (discharge plasma) takes place within the plasma chamber P₂. Thus, by the so-called plasma switching operation, there results the state where the electrode 5 and the anode electrode A₂ are electrically connected. Namely, when consideration is made from a viewpoint of the circuit operation, there results the state equivalent to the state where the plasma switch S₂ is turned ON.

As a result, an analog voltage delivered to the electrode 5 is stored into a capacitor model 14 of the column where the cathode electrode K₂ is in a strobe state. Even after strobe to the cathode electrode K₂ is completed, so discharge plasma is dissipated or lost, for a time period until next strobe is carried out (during at least a field interval of that image), this analog voltages remains in the state where it is stored in the respective capacitor models 14. As a result, this analog voltages does not undergo the influence of changes at subsequent times of analog voltages applied to the electrodes 5.

Accordingly, when an approach is employed to allow the cathode electrodes K₁, K₂, K₃ ... Kₙ₋₁, Kₙ to be subjected to sequential addressing to apply data strobe signals thereto to allow the plasma chambers P₁, P₂, P₃, ... Pₙ, and to apply at the same time liquid crystal drive signals as analog voltages to the respective electrodes 5 in synchronism with application of the data strobe signals, the plasma switches function as an active element in the same manner as in the case of the semiconductor elements such as thin film transistors, etc. Thus, the liquid crystal layer 3 is driven in the same manner as in the case of the active matrix addressing system.

It is to be noted that it is a matter of course that the drive system for an image display device is not limited to the above- described system.

In the above-described embodiment, respective paired electrodes (anode and cathode) are arranged as a discharge electrode within the plasma chambers P₁, P₂, P₃, ... Pₙ. In addition, by forming partition walls by the printing process, it is possible to increase the degree of the electrode position and the number of electrodes.

Explanation will now be given in connection with an embodiment in which partition walls are formed on the electrode, thus to reduce the number of discharge electrodes to one half.

Also in an electro-optical device applied to an image display device of the second embodiment, as shown in FIG. 5, between a first substrate 21 including belt-shaped electrodes 23 formed thereon and a second substrate 22 including discharge electrodes 24 formed thereon, a liquid crystal layer 25 serving as an electro-optical material layer is inserted. Further, a space between the dielectric film 26 and the second substrate 22 is caused to serve as a discharge region 27. This configuration is similar to the corresponding one of the above-described embodiment.

This embodiment is characterized in that discharge electrodes 24 on the second substrate 22 are arranged at equal intervals, and that partition walls 28 are formed by the printing process on the respective discharge electrodes 24, whereby the discharge chamber is divided into respective plasma chambers P₁, P₂, P₃ ... Pₙ. Such a configuration can be accomplished for the first time by print-forming partition walls 28 partitioning the discharge region 26.

In the case where partition walls 28 are print-formed on the discharge electrode 24 in a manner as described above, in the respective plasma chambers P₁, P₂, P₃ ... Pₙ partitioned by these partition walls 28, discharge electrodes 24 are commonly used. Namely, for example, the discharge electrode 24a serves as both a discharge electrode of the plasma chamber P₁ and a discharge electrode of the plasma chamber P₂. Similarly, the discharge electrode 24b serves as both a discharge electrode of the plasma chamber P₂ and a discharge electrode of the plasma chamber P₃. Accordingly, the number of electrodes can be reduced to one half.

Further, since there is employed a structure such that partition walls 28 which do not contribute to display and discharge electrodes 24 overlap with each other, the aperture or opening ratio can be improved, thus making it possible to improve the optical characteristic.

It is to be noted that in the case where discharge electrodes 24 are arranged in such a manner that they are commonly used for adjacent plasma chambers, it is necessary to devise somewhat the drive system. For example, it is sufficient to adopt an approach to allow respective discharge electrodes 24 to be electrodes serving as both anode and cathode to sequentially carry out switching between the anode and the cathode to allow the timings thereof to be in correspondence with each other to thereby sequentially carry out discharge at respective plasma chambers P₁, P₂, P₃ ... Pₙ.

While explanation has been given in connection with the actual embodiments to which this invention is applied, this invention is not limited to such embodiments. Namely, material, shape and dimension, etc. are arbitrary. In addition, while, in the above-described both embodiments, partition walls are print-formed every scanning unit, partition walls may be formed every a plurality of scanning units (two or more).

As is clear from the foregoing description, in accordance with this invention, since partition walls dividing the discharge region is formed by the printing process, difficult process of etching of grooves or formation of electrodes into grooves is unnecessary, and the manufacturing is easy. Further, this invention is advantageous to implementation of enlarged display screen or high accuracy.

In addition, in accordance with this invention, by allowing the discharge electrodes and the partition walls to overlap with each other, the occupied area thereof can be reduced. Thus, the aperture ratio can be improved. Accordingly, the efficiency can be improved. This is also advantageous to the optical characteristic.

## Claims

1. A method of fabricating an electro-optical device comprising steps of:
- forming a first substrate (1; 21) having a plurality of non-overlapping first electrodes (5; 23) on a major surface (la) thereof;
- forming a second substrate (2; 22) opposed to the first substrate;
- forming a plurality of non-overlapping second electrodes (7; 24a, 24b...) on a major surface of the second substrate, the second electrodes being disposed substantially perpendicular to the first electrodes;
- forming an electro-optical material layer (3; 25) between the first and second electrodes (5, 7; 23, 24,...); and
- forming a discharge chamber (4; 27) disposed between the electro-optical material layer and the second substrate and filling the discharge chamber with an ionizable gas, the discharge chamber having a plurality of scanning units (P₁, P₂) **characterized by** a step of forming partitioning walls (9; 28) for dividing the scanning units by
- laminate-printing a glass paste plural times by a screen printing process, wherein the number of screen printings is adjusted to control the gap interval of the discharge chamber.

2. The method as claimed in claim 1, further including a step of depositing a dielectric material layer (6; 26) between the electro-optical material layer and the discharge chamber.

3. The method as claimed in claim 1, wherein said partitioning walls (28) are formed on the second electrodes (24a, 24b....).

4. The method as claimed in claim 1, wherein said partitioning walls (9) are formed on the second substrate (2).

5. The method as claimed in claim 1, wherein said partitioning walls are formed at each scanning unit.

6. The method as claimed in claim 1, wherein said partitioning walls are formed at every plural scanning units.

7. The method as claimed in claim 1, wherein the step of forming the second electrodes comprises forming a plurality of pair electrodes which are comprised of anode and cathode electrodes.

8. The method as claimed in claim 1, wherein adjacent second electrodes are disposed at equal intervals.

9. The method as claimed in claim 8, wherein said partitioning walls are formed on the second electrodes.

10. A method of fabricating an addressing structure comprising steps of
- forming a substrate having a plurality of electrodes on a major surface thereof;
- forming a dielectric material layer opposed to the substrate and
- filling an ionizable gas between the substrate and the dielectric material layer, the ionizable gas defining a discharge region which provides scanning units,
**characterized in that** there is provided a step of forming partitioning walls for dividing the scanning units by laminate-printing a glass paste plural times by a screen printing process, wherein the number of screen printings is adjusted to control the gap interval of the discharge region.

## Patentansprüche

1. Verfahren zum Herstellen einer elektrooptischen Vorrichtung mit den Verfahrensschritten:
- Ausbilden eines ersten Substrats (1; 21), welches auf einer Hauptoberfläche (1a) eine Vielzahl von nicht-überlappenden ersten Elektroden (5; 23) aufweist;
- Ausbilden eines zweiten Substrats (2; 22), welches dem ersten Substrat gegenüberliegt:
- Ausbilden einer Vielzahl von nicht-überlappenden zweiten Elektroden (7; 24a; 24b ...) auf einer Hauptoberfläche des zweiten Substrats, wobei die zweiten Elektroden im wesentlichen senkrecht zu den ersten Elektroden angeordnet sind;
- Ausbilden einer elektrooptischen Materialschicht (3; 25) zwischen den ersten und zweiten Elektroden (5, 7; 23, 24,...); und
- Ausbilden einer Entladungskammer (4; 27), welche zwischen der elektrooptischen Materialschicht und dem zweiten Substrat angeordnet ist und Befüllen der Entladungskammer mit einem ionisierbaren Gas, wobei die Entladungskammer eine Vielzahl von Abtast- oder Bildzerlegungseinheiten (P1, P2) aufweist **gekennzeichnet durch** einen Verfahrensschritt des Ausbildens von Unterteilungswänden (9; 28) zum Unterteilen der Abtasteinheiten durch
- mehrfaches, schichtweises Aufdrucken einer Glaspaste durch einen Siebdruckprozeß. wobei die Anzahl von Siebdrucken zur Kontrolle des Abstandsintervalls der Entladungskammer eingestellt wird.

2. Verfahren nach Anspruch 1, **gekennzeichnet durch** einen weiteren Verfahrensschritt des Abscheidens einer dielektrischen Materialschicht (6; 26) zwischen der elektrooptischen Materialschicht und der Entladungskammer.

3. Verfahren nach Anspruch 1, **dadurch gekennzeichnet, daß** die Unterteilungswände (28) auf den zweiten Elektroden (24a, 24b....) gebildet werden.

4. Verfahren nach Anspruch 1, **dadurch gekennzeichnet, daß** die Unterteilungswände (9) auf dem zweiten Substrat (2) gebildet werden.

5. Verfahren nach Anspruch 1, **dadurch gekennzeichnet, daß** die Unterteilungswände bei jeder Abtasteinheit gebildet werden.

6. Verfahren nach Anspruch 1, **dadurch gekennzeichnet, daß** die Unterteilungswände bei jeder vielfachen Abtasteinheit gebildet werden.

7. Verfahren nach Anspruch 1, **dadurch gekennzeichnet, daß** der Verfahrenschritt des Ausbildens der zweiten Elektroden das Ausbilden einer Vielzahl von Paarelektroden umfaßt, welche durch Anoden- und Kathoden-Elektroden gebildet sind.

8. Verfahren nach Anspruch 1, **dadurch gekennzeichnet, daß** benachbarte zweite Elektroden in gleichen Intervallen angeordnet aind.

9. Verfahren nach Anspruch 8, **dadurch gekennzeichnet, daß** die Unterteilungswände auf den zweiten Elektroden gebildet werden.

10. Verfahren zur Herstellung einer Adressierungsstruktur umfassend die Verfahrensschritte
- Ausbilden eines Substrats mit einer Vielzahl von Elektroden auf einer ihrer Hauptoberflächen:
- Ausbilden einer dielektrischen Materialschicht, welche dem Substrat gegenüberliegt und
- Einfüllen eines ionisierbaren Gases zwischen das Substrat und die dielektrische Materialschicht, wobei das Gas einen Entladungsbereich definiert, durch welchen Abtast- oder Bildzerlegungseinheiten bereitgestellt werden,
**dadurch gekennzeichnet, daß** ein Verfahrensschritt des Ausbildens von Unterteilungswänden zum Unterteilen der Abtasteinheiten durch mehrfaches, schichtweises Aufdrucken einer Glaspaste durch einen Siebdruckprozeß bereitgestellt wird, wobei die Anzahl der Siebdrucke zur Kontrolle des Abstandsintervalls des Entladungsbereichs eingestellt wird.

## Revendications

1. Procédé de fabrication d'un dispositif électro-optique comportant les étapes consistant à :
former un premier substrat (1; 21) possédant une pluralité de premières électrodes ne se recouvrant pas (5; 23) sur une surface principale (1a) de celui-ci;
- former un second substrat (2; 22) en vis-à-vis du premier substrat;
- former une pluralité de secondes électrodes ne se recouvrant pas (7; 24a, 24b...) sur une surface principale du second substrat, les secondes électrodes étant disposées sensiblement perpendiculairement aux premières électrodes;
- former une couche de matériau électro-optique (3; 25) entre les premières et secondes électrodes (5, 7; 23, 24; ...) et
- former une chambre de décharge (4; 27) disposée entre la couche de matériau électro-optique et le second substrat et remplir la chambre de décharge d'un gaz ionisable, la chambre de décharge ayant une pluralité d'unités de balayage (P₁, P₂)
caractérisé par une étape de formation de parois de séparation (9; 28) pour diviser les unités de balayage en
- imprimant par feuilletage une pâte de verre plusieurs fois par sérigraphie, le nombre de sérigraphies étant réglé pour contrôler l'intervalle de la chambre de décharge.

2. Procédé selon la revendication 1, comprenant en outre une étape de dépôt d'une couche de matériau diélectrique (6; 26) entre la couche de matériau électro-optique et la chambre de décharge.

3. Procédé selon la revendication 1, dans lequel lesdites parois de séparation (28) sont formées sur les secondes électrodes (24a, 24b...).

4. Procédé selon la revendication 1, dans lequel lesdites parois de séparation (9) sont formées sur le second substrat (2).

5. Procédé selon la revendication 1, dans lequel lesdites parois de séparation sont formées sur chaque unité de balayage.

6. Procédé selon la revendication 1, dans lequel lesdites parois de séparation sont formées chacune pour plusieurs unités de balayage.

7. Procédé selon la revendication 1, dans lequel l'étape de formation des secondes électrodes comporte la formation d'une pluralité de paires d'électrodes qui sont constituées d'électrodes d'anode et de cathode.

8. Procédé selon la revendication 1, dans lequel les secondes électrodes adjacentes sont disposées à des intervalles égaux.

9. Procédé selon la revendication 8, dans lequel lesdites parois de séparation sont formées sur les secondes électrodes.

10. Procédé de fabrication d'une structure d'adressage comportant les étapes consistant à :
- former un substrat possédant une pluralité d'électrodes sur une de ses surfaces principales;
- former une couche de matériau diélectrique en vis-à-vis du substrat, et
- remplir d'un gaz ionisable l'espace entre le substrat et la couche de matériau diélectrique, le gaz ionisable définissant une région de décharge qui constitue des unités de balayage,
caractérisé en ce qu'une étape est prévue de formation de parois de séparation pour diviser les unités de balayage par impression d'une pâte de verre plusieurs fois par sérigraphie, le nombre de sérigraphies étant réglé pour contrôler l'intervalle de la région de décharge.
